(19) Europäisches Patentamt
European Patent Office
Office européen des brevets

(11)  EP 3 008 445 B1

(12)  **FASCICULE DE BREVET EUROPEEN**

(45) Date de publication et mention de la délivrance du brevet:
**28.08.2019  Bulletin 2019/35**

(21) Numéro de dépôt: **14730140.2**

(22) Date de dépôt: **11.06.2014**

(51) Int Cl.:
*G01M 17/02* (2006.01)     *G06T 7/00* (2017.01)

(86) Numéro de dépôt international:
**PCT/EP2014/062135**

(87) Numéro de publication internationale:
**WO 2014/198777 (18.12.2014 Gazette 2014/51)**

(54)  **METHODE DE TRAITEMENT DE L'IMAGE NUMERIQUE DE LA SURFACE D'UN PNEUMATIQUE EN VUE DE LA DETECTION D'UNE ANOMALIE**

VERFAHREN ZUM VERARBEITEN EINES DIGITALEN BILDES DER OBERFLÄCHE EINES REIFENS ZUR ERKENNUNG EINER ANOMALIE

METHOD FOR PROCESSING A DIGITAL IMAGE OF THE SURFACE OF A TIRE IN ORDER TO DETECT AN ANOMALY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **13.06.2013  FR 1355503**

(43) Date de publication de la demande:
**20.04.2016  Bulletin 2016/16**

(73) Titulaire: **Compagnie Générale des Etablissements Michelin**
**63000 Clermont-Ferrand (FR)**

(72) Inventeurs:
• **BOURGEOIS, Steve**
**F-91120 Palaiseau (FR)**
• **VINCIGUERRA, Régis**
**F-91120 Palaiseau (FR)**
• **JOLY, Alexandre**
**F-63040 Clermont-Ferrand Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 2 295 930     US-A- 4 311 044
US-B2- 7 257 996**

• **SKIFSTAD K ET AL: "RANGE ESTIMATION FROM INTENSITY GRADIENT ANALYSIS", PROCEEDINGS OF THE INTERNATIONAL CONFERENCE ON ROBOTICS AND AUTOMATION. SCOTTSDALE, MAY 15 - 19, 1989; [PROCEEDINGS OF THE INTERNATIONAL CONFERENCE ON ROBOTICS AND AUTOMATION], WASHINGTON, IEEE COMP. SOC. PRESS, US, vol. VOL. 1, no. 1989, 15 mai 1989 (1989-05-15), pages 43-48, XP000047433, DOI: 10.1109/ROBOT.1989.99965 ISBN: 978-0-8186-1938-0**

**Description**

L'invention concerne le domaine de la fabrication des pneumatiques, et plus particulièrement l'étape au cours de laquelle le pneumatique est inspecté en vue d'établir un diagnostic de conformité par rapport à des références préétablies.

Cette étape de contrôle peut être exécutée par un opérateur effectuant une inspection visuelle détaillée du pneumatique. De manière alternative, des méthodes d'inspection automatique sont en cours de développement et font appel à des méthodes d'analyse d'une image de la surface du pneumatique. Cette image peut être une image du relief, et on parle alors d'image 3D ou une image des niveaux de couleurs et on parle alors d'une image 2D. Ces deux images peuvent être utilisées séparément ou être combinées en fonction de l'élément particulier que l'on souhaite détecter.

L'image de la surface en trois dimensions peut être obtenue à l'aide de moyens connus, basés sur le principe de la triangulation optique, et faisant appel à des capteurs couplés à des sources de lumière telles que des sources laser. Tout autre type de capteur 3D permettant d'obtenir cette image d'élévation convient à la méthode, par exemple des capteurs utilisant les techniques de stéréo vision, coupe optique, temps de vol laser, etc. On obtient de la sorte une image topographique de la surface du pneumatique. Un exemple d'une méthode d'inspection de la surface d'un pneumatique de l'image numérique tridimensionnelle est divulguée dans US 7 257 996 (Hassler ULF [DE] ET AL) 2007-08-21.

Pour faciliter les traitements numériques de l'image il est courant de faire correspondre le niveau de gris associé à un point formant un pixel de l'image à l'élévation de ce point par rapport à la surface du pneumatique. On obtient alors une image bidimensionnelle en noir et blanc que l'on peut exploiter à l'aide des techniques de traitement d'image adaptées au cas particulier du pneumatique.

Parmi les anomalies pouvant se manifester à la surface interne ou externe du pneumatique, les occlusions d'air, provoquant ce qui est communément dénommé sous l'appellation de soufflures, sont courantes.

Ces soufflures se manifestent sous la forme d'un gonflement localisé induisant de faibles surélévations au niveau de la surface du pneumatique. La surface de ces soufflures excède rarement une dizaine de cm$^2$, et leur forme, plus ou moins circulaire, évoque souvent l'allure de la tête d'un dôme. Par ailleurs, leur amplitude excède rarement quelques millimètres.

Les caractéristiques géométriques de ces soufflures les rendent souvent difficiles à localiser par des opérateurs même expérimentés. Il est alors particulièrement intéressant d'automatiser cette tâche par des méthodes de traitement d'image comme celle faisant l'objet de ce document.

L'invention a pour objet de tirer parti de ces caractéristiques dimensionnelles. On observe en effet que lesdites soufflures ont des lignes de plus grande pente qui convergent sensiblement vers un centre représenté par le point de plus grande élévation par rapport à la surface du pneumatique.

Le procédé selon l'invention prévoit ainsi de capturer l'image des élévations tridimensionnelle de ladite surface et d'affecter à chaque point de la surface représenté par un pixel de l'image un niveau de gris proportionnel à son élévation par rapport à ladite surface.

La méthode d'analyse de l'image ainsi obtenue se caractérise en ce qu'elle comprend les étapes au cours desquelles :

- à partir de cette image des élévations, on forme une image de l'orientation des gradients d'élévation de la surface dans laquelle on affecte à chaque point une valeur de niveau de gris proportionnelle à l'angle formé avec une direction donnée par la projection dans le plan de l'image d'un vecteur de norme non nulle correspondant sensiblement, en ce point, au vecteur gradient tangent à la surface et orienté dans la direction de la plus forte pente.
- on détermine une image filtrée des orientations en transformant l'image de l'orientation des gradients d'élévation à l'aide d'un filtre numérique apte à sélectionner les zones comportant des structures similaires à une image de référence de l'orientation des gradients d'élévation d'une soufflure.

Comme cela a été évoqué ci-dessus, l'image des gradients d'élévation d'une soufflure de référence présente une structure particulière qui se caractérise en ce que les vecteurs gradients orientés dans le sens de la plus grande pente des points appartenant à une soufflure, sont tous sensiblement orientés vers un centre correspondant au point le plus élevé de ladite soufflure et équivalent au sommet du dôme. De la sorte, les angles formés par ces vecteurs gradients avec une direction donnée varient de manière continue de 0° à 360°. En attribuant une valeur de gris proportionnelle à cet angle, on obtient une variation de gris évoluant continûment le long d'une courbe de niveau quelconque du dôme formé par ladite soufflure, et dont la forme épouse sensiblement la forme d'un cercle centré sur le point central de plus forte élévation. La structure de l'image de référence de l'orientation des gradients d'élévation d'une soufflure se présente donc sous la forme d'un dégradé sensiblement circonférentiel de niveaux de gris.

Préférentiellement, pour obtenir l'image filtrée des orientations, on réalise le produit de convolution de l'image de l'orientation des gradients d'élévation de la surface et d'un masque formé par l'image de l'orientation des gradients d'élévation d'une soufflure de référence. La convolution est une opération qui va avoir pour effet de faire ressortir les zones de la surface à inspecter dans lesquelles la ressemblance avec cette image de référence est la plus forte.

Pour faciliter les calculs la méthode peut prévoir, en chaque point de l'image des élévations, d'assimiler le vecteur gradient orienté dans la direction de la plus forte pente à la somme de deux vecteurs gradients tangents à la surface et orientés respectivement selon deux directions orthogonales.

Préférentiellement, on réalise un seuillage de l'image filtrée des orientations pour déterminer les zones ayant la plus grande probabilité de contenir une soufflure.

Pour réduire les détections à tort on peut utilement prévoir des étapes supplémentaires au cours desquelles :

- on détermine les points de la surface formant des éléments en relief correspondant aux marquages réalisés par moulage, et on ramène le niveau de gris en ces points à la valeur de niveau de gris de la surface à inspecter pour obtenir une image d'élévation corrigée,
- en chaque point de l'image d'élévation corrigée on détermine des élévations moyennes des pixels appartenant au voisinage proche ou lointain du point considéré, et on détermine une image filtrée des élévations en affectant à ce pixel un niveau de gris proportionnel à un score d'élévation calculé en comparant ces élévations moyennes à des valeurs de seuils prédéterminées.

On peut alors utilement faire le produit de l'image filtrée des orientations et de l'image filtrée des élévations pour obtenir une image combinée.

Pour améliorer la lecture de l'image combinée, on peut réaliser un seuillage de l'image combinée pour obtenir une image segmentée dans laquelle les zones de la surface à inspecter susceptibles de contenir une soufflure sont mises en évidence.

La description qui suit s'appuie sur les figures 1 à 9 dans lesquelles :

- la figure 1 représente l'image 3D de la surface d'un pneumatique,
- la figure 2 représente l'image de l'orientation des gradients d'élévation de ladite surface,
- la figure 3 représente l'image de référence de l'orientation des gradients d'élévation d'une soufflure de référence,
- la figure 4 représente l'image filtrée des orientations de ladite surface,
- la figure 5 représente l'image de la surface du pneumatique de laquelle les éléments en relief provenant des marquages formés par moulage ont été extraits,
- la figure 6 représente une vue schématique des points considérés à titre d'exemple comme appartenant au voisinage proche ou lointain d'un point de l'image,
- la figure 7 représente l'image filtrée des élévations de la surface,
- la figure 8 représente l'image combinée formée par le produit de l'image filtrée des orientations et de l'image filtrée des élévations,
- la figure 9 représente l'image segmentée après seuillage de l'image combinée.

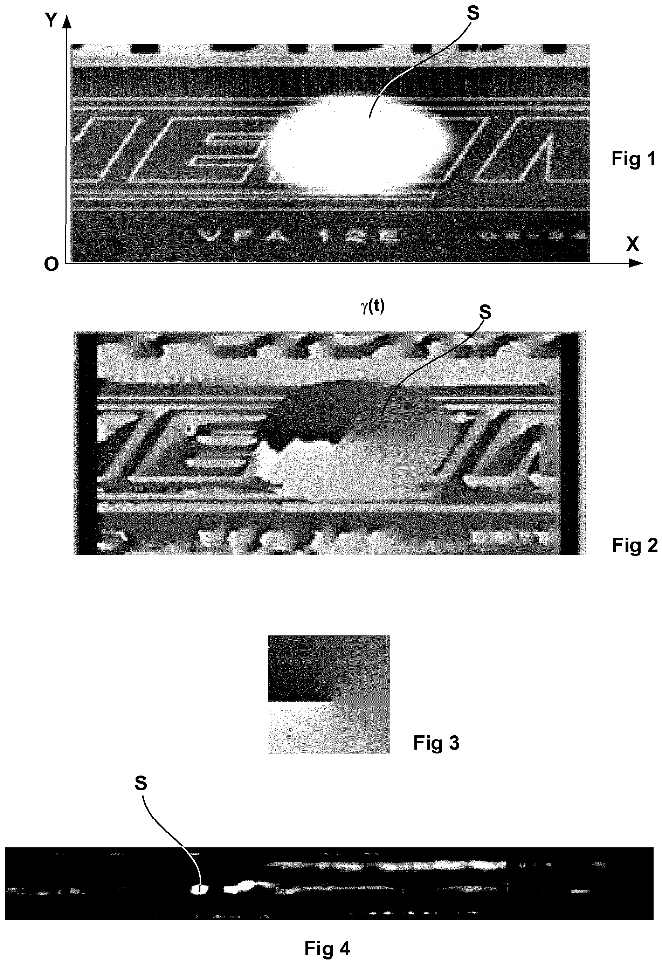

L'image de la figure 1 représente l'image d'une partie de la surface d'un pneumatique. Elle est obtenue par des moyens connus de réalisation d'une image en trois dimensions formés par exemple d'une caméra 2D, couplée à un dispositif d'éclairage laser émettant une raie lumineuse orientée radialement et ayant un angle d'incidence connu avec la surface. Un simple calcul de triangulation permet de connaitre l'élévation d'un point par rapport à un niveau de référence considéré ici comme le niveau de la surface du pneumatique sans éléments de gravure.

Chaque point de la surface est assimilé à un pixel de l'image. En affectant une faible valeur de gris (la valeur 0 correspondant au noir) aux points de la surface appartenant au niveau de référence, et une valeur de gris supérieure aux éléments en relief (la valeur $2^n$, où n représente le nombre de bits de l'image acquise, correspondant au blanc), on obtient une image de la surface en niveaux de gris dans laquelle les valeurs claires correspondent aux points en relief par rapport à la surface de base de couleur plus sombre.

Pour obtenir l'image complète de la surface du flanc ou de la partie intérieure, le pneumatique est mis en rotation autour de son axe. L'image finale des élévations ainsi obtenue est en général une image exprimée en coordonnées polaires $(\rho, \theta)$. Aussi, pour les besoins de l'analyse, il est courant de convertir cette image des élévations en coordonnées cartésiennes, dans lesquelles les valeurs angulaire correspondent aux valeurs selon un premier axe (OX) et les valeurs de module correspondent aux valeurs selon un second axe orthogonal (OY).

Il est à noter que cette méthode peut s'appliquer au flanc et à l'intérieur ou tout autre zone pouvant présenter des soufflures (bourrelet, sommet, épaules, ...). L'acquisition concerne donc les surfaces extérieure et intérieure des enveloppes.

On observe la présence, au centre de l'image des élévations de la figure 1, d'une soufflure S de couleur claire indiquant sa position surélevée par rapport à la surface de base.

Il serait possible à ce stade de détecter la soufflure en recherchant, à l'aide d'une simple analyse de seuil, les surfaces claires, se détachant du fond plus sombre.

On observe toutefois que cette analyse ne permet pas de filtrer des zones plus claires engendrées par des variations lentes de l'altitude de la surface du pneumatique et provoquées par exemple par des déformations locales du flanc ou encore par des marquages en relief de grande surface. L'invention a également pour objet de distinguer les soufflures de ces éléments.

La figure 2 représente l'image de l'orientation des gradients de la même portion de surface dans laquelle le niveau de gris affecté à chaque pixel est proportionnel à l'angle formé avec la direction OX par la projection dans le plan OXY du vecteur gradient de norme non nulle orienté en ce point dans la direction de la plus forte pente.

L'évaluation du gradient de plus forte pente en un point peut se faire par itérations successives du calcul de la dérivée au point considéré en recherchant la direction dans laquelle la valeur de cette dérivée est la plus faible.

Par souci de simplification des calculs, on assimile ce gradient à la somme du vecteur gradient selon la direction OX et du vecteur gradient selon la direction OY. Ces deux vecteurs sont tangents à la surface au point considéré et leur module est proportionnel au gradient d'élévation respectivement dans chacune des directions OX et OY.

On observe alors que les points situés en bordure des éléments de marquage en relief ont un vecteur gradient orientés selon une direction perpendiculaire à la ligne frontière du marquage faisant ressortir ces lignes avec un niveau de gris proportionnel à l'angle de la ligne par rapport à l'axe des abscisses OX. De même, les variations de niveau liées à des dépressions radiales localisées ont des vecteurs gradients orientés dans une même direction et seront reconnaissables par des zones sombres dans la partie de la pente descendante, allant vers le fond de la dépression, et par des zones claires dans la partie de la pente remontante.

Les soufflures se caractérisent par le fait que les vecteurs gradients orientés dans le sens de la plus grande pente convergent sensiblement vers le centre de la partie sommitale de la soufflure. Les angles formés avec la direction OX par les vecteurs gradients des points situés sur un cercle centré sur le point de plus grande élévation de la soufflure varient donc de manière continue de la valeur 0 (correspondant au noir) à la valeur 360° (correspondant au blanc). L'image d'une soufflure apparait donc comme un dégradé circonférentiel de gris comme cela est illustré par la figure 3.

On observera ici que les soufflures peuvent se départir de la forme circulaire et avoir une forme plus ou moins allongée dans une direction donnée. Les angles formés par les vecteurs gradients orientés dans le sens de la plus forte pente de ces structures présentent néanmoins une image très proche des soufflures de forme plus circulaires, en ce que ces vecteurs convergent vers le point de plus grande élévation de la soufflure ou vers une ligne de crête généralement de très faible amplitude. Elles s'en différencient seulement en ce que les lignes de niveau sont plus ou moins allongées ce qui revient à modifier localement la variation plus ou moins continue du niveau de gris de la structure représentée à la figure 3.

Cette structure est également apparente sur la figure 2 à l'emplacement de la zone claire de la figure 1, et présente donc une forte probabilité de représenter une soufflure.

Pour identifier cette zone avec plus de certitude, on utilise donc une image de référence d'une soufflure, et on localise les zones de l'image de l'orientation des gradients de l'image de la surface du pneumatique dont la configuration et la structure ressemble le plus à la structure de l'image de l'orientation des gradients de plus forte pente d'une soufflure de référence telle que représentée à la figure 3.

A cet effet, on utilise un filtre F, comprenant une opération de convolution adaptée à ce type de mise en correspondance et dont le masque M est formé par l'image de l'orientation des gradients de plus forte pente de ladite soufflure.

Si on note M le masque modèle de taille *(2L+1) x(2H+1),* O l'image d'orientation du gradient, ∥ ∥ la distance angulaire, la réponse du filtre F caractérisant la forme évaluée au pixel (x,y) est donnée par :

$$F(x,y) = \frac{\sum_{i=-L}^{L}\sum_{j=-H}^{H}\big(D(\|O(x-i,y-j) - M(i+L,j+H)\|)\big)}{(2L+1)x(2H+1)}$$

avec la fonction D définie de la manière suivante :

- $D(\alpha)=1$ si $|a| \leq S_{valid}$
- $D(\alpha)=0$ si $S_{valid} < |\alpha| < S_{error}$
- $D(\alpha)=-2$ si $|\alpha| \geq S_{error}$

et où, $S_{valid}$ correspond au seuil en deçà duquel les deux pixels sont considérés comme ayant une orientation similaire, et $S_{error}$ correspond au seuil au-delà duquel les deux pixels ont une orientation considérée comme incompatible.

Un poids peut être associé aux pixels évalués par le filtre en fonction du niveau de magnitude du gradient correspondant, afin de diminuer l'influence des pixels dont l'élévation est faible par rapport à leur voisinage (plus la différence d'élévation entre un pixel et son voisinage est grande, plus la magnitude du gradient de ce pixel sera élevée, et plus il devra être prépondérant pour le filtre).

A l'issue de cette opération on obtient une image filtrée des orientations qu'il est possible de filtrer par une opération de seuillage de manière à faire apparaitre en blanc sur fond noir les zones présentant une forte probabilité de contenir une soufflure, comme cela est représenté à la figure 4.

On observe toutefois sur l'image de la figure 4, que certaines zones de l'image apparaissent en couleur claire alors qu'elles ne contiennent pas de soufflure.

Aussi, pour éliminer ces zones détectées à tort on peut utilement analyser l'image de la surface en recherchant les zones en relief à l'aide d'une méthode distincte.

Pour ce faire, on reprend l'image des élévations telle que représentée à la figure 1 et on recherche les marquages présents sur la surface à inspecter et obtenus par moulage.

Plusieurs méthodes sont possibles pour détecter ces points.

Une première méthode consiste à utiliser le modèle numérique issu des données de conception permettant de réaliser le moule. Cette méthode s'applique particulièrement bien aux flancs extérieurs du pneumatique et à toute zone pour laquelle il est possible d'obtenir un modèle numérique des éléments en relief.

La méthode consiste alors à recaler ce modèle numérique sur la surface et à considérer que chaque marquage défini dans le modèle numérique correspond à un marquage présent sur le flanc du pneumatique. Une méthode de ce type est décrite à titre d'exemple dans la publication EP 1 750 089, dans la publication EP 2 235 679, ou encore dans la publication FR 2 966 956.

Une autre méthode possible consiste à repérer les zones en relief sur une enveloppe initiale ne présentant pas de soufflure, puis à recaler cette cartographie sur l'acquisition en cours d'analyse par des méthodes classiques (recherche de signatures communes, corrélation, minimisation de la différence, ...)

Une autre méthode consiste à segmenter l'image des élévations, et à déterminer les points pour lesquels les variations de gradient de gris présentent une valeur supérieure à un certain seuil, de manière à identifier des contours, caractéristiques des zones de marquage. On observera ici que les soufflures présentent des gradients d'élévation beaucoup plus faibles et ne seront donc pas assimilées à des contours.

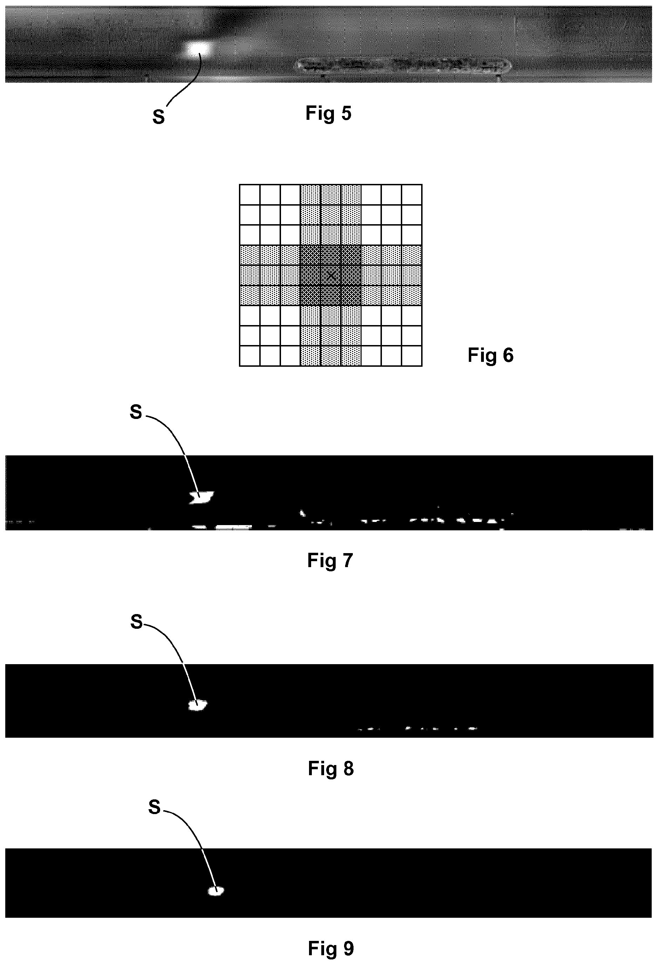

Une fois les points considérés comme appartenant à des zones de marquage identifiés, on ramène la valeur de niveau de gis en ces points à la valeur de niveau de gris de la surface de base avoisinante. Cette opération consiste donc à supprimer les marquages de la surface à inspecter pour obtenir une image d'élévation corrigée, comme cela est représenté à la figure 5. On observe là encore, que la zone où se situe la soufflure forme une zone claire, et donc en relief par rapport à la surface de base, et n'a pas été assimilée à une zone de marquage.

On va alors rechercher les zones dans lesquelles les points/les pixels ont une différence d'élévation par rapport à leur voisinage proche ou par rapport à leur voisinage plus éloigné comprise entre des seuils prédéterminés et caractéristiques des valeurs de seuil observés dans les soufflures couramment rencontrées.

La méthode se base sur deux observations :

- un pixel appartenant à une soufflure doit avoir une élévation par rapport à son voisinage supérieure à un seuil $T_{High}$,
- la probabilité que le pixel appartienne à une soufflure est proportionnelle à l'amplitude d'élévation entre le centre de la soufflure et son voisinage.

A des fins de performance, les mesures d'élévation sont effectuées par une estimation de la moyenne des élévations selon un axe horizontal OX et un axe vertical OY, sans distinction d'importance des différentes parties du voisinage.

Bien sûr, des mesures plus complexes peuvent être imaginées, en construisant un voisinage plus détaillé, en attribuant un poids plus ou moins fort aux différentes zones du voisinage considéré, et en choisissant des mesures statistiques autres que les moyennes.

Le découpage du voisinage utilisé est représenté à la Figure 6 dans lequel le voisinage proche du point X est le voisinage grisé en sombre, et dans lequel le voisinage plus lointain est indiqué en gris plus clair.

Pour un point/pixel X de coordonnées (x, y) appartenant à l'image d'élévation corrigée, l'élévation moyenne est donc mesurée pour chacun des voisinages.

Ces élévations moyennes sont notées $\mu_{proche}(X)$, $\mu_{verticale}(X)$, $\mu_{horizontale}(X)$, et correspondent respectivement aux zones centrales, verticales et horizontales.

- on note $\xi_{max}$ la variation d'élévation maximale :

$$\xi_{max}(X)= max( \{\mu_{proche}(X)- \mu_{verticale}(X), \mu_{proche}(X)-\mu_{horizontale}(X), 0\}$$

- on note $\xi_{max}$ la variation d'élévation minimale :

$$\xi_{min}(X)= min( \; max(\{\mu_{proche}(X)- \mu_{verticale}(X),0\}), \; max(\{ \; \mu_{proche}(X)-\mu_{horizontale}(X), \; 0\}))$$

On attribue un score $\xi$, correspondant à la valeur de niveau de gris en ce point, qui est le résultat d'un filtre d'élévation estimé au pixel X(x, y), et défini de la manière suivante :

$$\xi (X)= \begin{cases} (\xi_{min}(X) / T_{Low}) & si \; (\xi_{max}(X)>T_{High}) \\ 0 \; sinon \end{cases}$$

où $T_{High}$ et $T_{Low}$ sont deux paramètres de la méthode déterminés en fonction de valeurs moyennes observées sur des soufflures couramment détectées dans une gamme de pneumatiques donnée.

La figure 7 permet de visualiser l'image filtrée des élévations correspondante au résultat des opérations explicitées ci-dessus.

On observe que la zone correspondant à la soufflure mise en évidence par le filtre des orientations et visible à la figure 4, apparait encore clairement.

Apparaissent également des zones claires ne correspondant pas à des zones susceptibles de contenir une soufflure. Ces zones claires sont toutefois distinctes des zones claires détectées à tort dans l'image filtrée des orientations de la figure 4.

De la sorte, et pour diminuer les risques de détection à tort, on peut utilement combiner les résultats obtenus par les deux filtres décrits ci-dessus en faisant le produit de l'image filtrée des orientations telle qu'illustrée à la figure 4 et de l'image filtrée des élévations telle qu'illustrée à la figure 7, ou utiliser toute autre méthode de combinaison statistique de combinatoire.

Ce produit revient en un pixel de l'image donné, à multiplier la valeur de niveau de gris obtenue pour ce pixel dans l'image filtrée des orientations par la valeur de niveau de gris obtenue pour ce même pixel dans l'image filtrée des élévations.

On obtient alors une image combinée telle qu'illustrée à la figure 8.

La zone correspondant à la soufflure apparait alors de manière distincte.

Pour éliminer les dernières incertitudes provenant des opérations de filtrage on peut utilement réaliser un dernier filtrage de l'image par l'application d'un seuillage tel qu'un seuillage par hystérésis.

Il s'agit d'une technique de segmentation d'images couramment utilisée qui sélectionne des pixels d'une image en niveau de gris en fonction de deux paramètres dits seuil haut (Sh) et seuil bas (Sb). L'algorithme fonctionne de la manière suivante:

- extraction des pixels dont le niveau de gris est supérieur à Sh = pixels P1,
- extraction des pixels dont le niveau de gris est compris entre Sb et Sh = pixels P2,
- sélection de tous les pixels P1 + les pixels P2 connexes aux pixels P1.

On obtient au final une image segmentée dans laquelle les zones de la surface susceptibles de contenir une soufflure apparaissent en clair comme cela est illustré à la figure 9. Les zones détectées à tort ont été totalement éliminées.

Les algorithmes de mise en oeuvre de la méthode sont indiqués ici à titre exemplatif en raison de leur simplicité de mise en oeuvre sur des moyens de calcul utilisés dans l'industrie. Ils peuvent toutefois faire l'objet de nombreuses variantes sans pour autant se départir de l'esprit de l'invention.

**Revendications**

1. Méthode d'analyse de l'image numérique tridimensionnelle de la surface d'un pneumatique à inspecter dans laquelle on capture l'image des élévations tridimensionnelle de ladite surface en affectant à chaque point de la surface représenté par un pixel de l'image un niveau de gris proportionnel à son élévation par rapport à ladite surface, **caractérisée en ce que** :

   - à partir de cette image des élévations, on forme une image de l'orientation des gradients d'élévation de la surface dans laquelle on affecte à chaque point une valeur de niveau de gris proportionnelle à l'angle formé avec une direction donnée par la projection dans le plan de l'image d'un vecteur de norme non nulle correspondant sensiblement, en ce point, au vecteur gradient tangent à la surface et orienté dans la direction de la plus forte pente.

- on détermine une image filtrée des orientations en transformant l'image de l'orientation des gradients d'élévation à l'aide d'un filtre numérique apte à sélectionner les zones comportant des structures similaires à une image de référence de l'orientation des gradients d'élévation de plus forte pente d'une soufflure.

**2.** Méthode d'analyse selon la revendication 1 dans laquelle l'image de référence de l'orientation des gradients d'élévation d'une soufflure se présente sous la forme d'un dégradé sensiblement circonférentiel de niveaux de gris.

**3.** Méthode d'analyse selon la revendication 1, dans laquelle, pour obtenir l'image filtrée des orientations, on réalise le produit de convolution de l'image de l'orientation des gradients d'élévation de la surface et d'un masque formé par l'image de l'orientation des gradients d'élévation de plus forte pente d'une soufflure de référence.

**4.** Méthode d'analyse selon l'une des revendications 1 à 3, dans laquelle, en chaque point, on assimile le vecteur gradient orienté dans la direction de la plus forte pente à la somme de deux vecteurs gradients tangents à la surface et orientés respectivement selon deux directions orthogonales.

**5.** Méthode d'analyse selon l'une des revendications 1 à 4, dans laquelle on réalise un seuillage de l'image filtrée des orientations pour déterminer les zones ayant la plus grande probabilité de contenir une soufflure.

**6.** Méthode d'analyse selon l'une des revendications 1 à 5 dans laquelle :

- on détermine les points de la surface formant des éléments en relief correspondant aux marquages réalisés par moulage, et on ramène le niveau de gris en ces points à la valeur de niveau de gris de la surface à inspecter pour obtenir une image d'élévation corrigée,
- en chaque point de l'image d'élévation corrigée, on détermine des élévations moyennes des pixels appartenant au voisinage proche ou lointain du point considéré, et on détermine une image filtrée des élévations en affectant à ce pixel un niveau de gris proportionnel à un score d'élévation calculé en comparant ces élévations moyennes à des valeurs de seuils prédéterminées.

**7.** Méthode d'analyse selon la revendication 6, dans laquelle on fait le produit de l'image filtrée des orientations et de l'image filtrée des élévations pour obtenir une image combinée.

**8.** Méthode d'analyse selon la revendication 7 dans laquelle on réalise un seuillage de l'image combinée pour obtenir une image segmentée dans laquelle les zones de la surface à inspecter susceptibles de contenir une soufflure sont mises en évidence.

## Patentansprüche

**1.** Verfahren zur Analyse des dreidimensionalen digitalen Bildes der Oberfläche eines zu inspizierenden Reifens, bei welchem das dreidimensionale Bild der Höhen der Oberfläche erfasst wird, indem jedem Punkt der Oberfläche, der durch ein Pixel des Bildes dargestellt ist, eine Graustufe zugewiesen wird, die zu seiner Höhe in Bezug auf die Oberfläche proportional ist, **dadurch gekennzeichnet, dass**:

- aus diesem Bild der Höhen ein Bild der Ausrichtung der Höhengradienten der Oberfläche gebildet wird, in welchem jedem Punkt ein Graustufenwert zugewiesen wird, der proportional zu dem Winkel ist, der von der Projektion eines Vektors mit von null verschiedener Norm, der in diesem Punkt im Wesentlichen dem Gradientenvektor entspricht, der tangential zu der Oberfläche ist und in der Richtung der stärksten Neigung ausgerichtet ist, mit einer gegebenen Richtung gebildet wird,
- ein gefiltertes Bild der Ausrichtungen bestimmt wird, indem das Bild der Ausrichtung der Höhengradienten mithilfe eines digitalen Filters umgewandelt wird, das geeignet ist, die Bereiche auszuwählen, welche Strukturen aufweisen, die einem Referenzbild der Ausrichtung der die stärkste Neigung aufweisenden Höhengradienten einer Beule ähnlich sind.

**2.** Verfahren zur Analyse nach Anspruch 1, wobei das Referenzbild der Ausrichtung der Höhengradienten einer Beule in der Form eines sich im Wesentlichen in Umfangsrichtung erstreckenden Graustufenverlaufs vorliegt.

**3.** Verfahren zur Analyse nach Anspruch 1, wobei, um das gefilterte Bild der Ausrichtungen zu erhalten, das Faltungsprodukt des Bildes der Ausrichtung der Höhengradienten der Oberfläche und einer Maske gebildet wird, die von dem Bild der Ausrichtung der die stärkste Neigung aufweisenden Höhengradienten einer Referenz-Beule gebildet wird.

4. Verfahren zur Analyse nach einem der Ansprüche 1 bis 3, wobei in jedem Punkt der Gradientenvektor, der in der Richtung der stärksten Neigung ausgerichtet ist, der Summe von zwei Gradientenvektoren gleichgesetzt wird, die tangential zur Oberfläche sind und in jeweils in zwei orthogonalen Richtungen ausgesetzt sind.

5. Verfahren zur Analyse nach einem der Ansprüche 1 bis 4, wobei eine Schwellenwertverarbeitung des gefilterten Bildes der Ausrichtungen durchgeführt wird, um die Bereiche zu bestimmen, welche die größte Wahrscheinlichkeit aufweisen, dass sie eine Beule enthalten.

6. Verfahren zur Analyse nach einem der Ansprüche 1 bis 5, wobei:

   - die Punkte der Oberfläche bestimmt werden, welche erhabene Elemente bilden, die den durch Formen hergestellten Markierungen entsprechen, und die Graustufe in diesen Punkten auf den Graustufenwert der zu inspizierenden Oberfläche reduziert wird, um ein korrigiertes Höhenbild zu erhalten,
   - in jedem Punkt des korrigierten Höhenbildes mittlere Höhen der Pixel bestimmt werden, die zur nahen oder fernen Umgebung des betrachteten Punktes gehören, und ein gefiltertes Bild der Höhen bestimmt wird, indem diesem Pixel eine Graustufe zugewiesen wird, die zu einem Höhen-Punktwert proportional ist, der berechnet wird, indem diese mittleren Höhen mit vorbestimmten Schwellenwerten verglichen werden.

7. Verfahren zur Analyse nach Anspruch 6, indem das Produkt des gefilterten Bildes der Ausrichtungen und des gefilterten Bildes der Höhen gebildet wird, um ein kombiniertes Bild zu erhalten.

8. Verfahren zur Analyse nach Anspruch 7, wobei eine Schwellenwertverarbeitung des kombinierten Bildes durchgeführt wird, um ein segmentiertes Bild zu erhalten, in welchem die Bereiche der zu inspizierenden Oberfläche, die eine Beule enthalten könnten, hervorgehoben sind.

## Claims

1. Method for analysing the three-dimensional digital image of the surface of a tyre to be inspected, wherein the three-dimensional image of the elevations of said surface is captured by assigning to each point of the surface represented by a pixel of the image a grey level proportional to its elevation relative to said surface, **characterized in that**:

   - on the basis of this image of the elevations, an image of the orientation of the elevation gradients of the surface is formed, in which each point is assigned a value of grey level proportional to the angle formed with a direction given by the projection in the image plane of a non-zero norm vector substantially corresponding, at this point, to the gradient vector tangent to the surface and orientated in the direction of the greatest slope.
   - a filtered image of the orientations is determined by transforming the image of the orientation of the elevation gradients using a digital filter capable of selecting the areas comprising structures similar to a reference image of the orientation of the elevation gradients of a blow hole having the greatest slope.

2. Method of analysis according to Claim 1, wherein the reference image of the orientation of the elevation gradients of a blow hole takes the form of a substantially circumferential gradation of grey levels.

3. Method of analysis according to Claim 1, wherein a filtered image of the orientations is obtained by finding the convolution product of the image of the orientation of the elevation gradients of the surface and a mask formed by the image of the orientation of the elevation gradients having the greatest slope of a reference blow hole.

4. Method of analysis according to any of Claims 1 to 3, wherein, at each point, the gradient vector orientated in the direction of the greatest slope is considered to be equivalent to the sum of two gradient vectors tangent to the surface and orientated, respectively, in two orthogonal directions.

5. Method of analysis according to any of Claims 1 to 4, wherein a thresholding operation is performed on the filtered image of the orientations, in order to determine the areas most likely to contain a blow hole.

6. Method of analysis according to any of Claims 1 to 5, wherein:

- the points on the surface forming relief elements corresponding to the markings made by moulding are determined, and the grey level at these points is adjusted to the grey level of the surface to be inspected so as to obtain a corrected elevation image,

- at each point of the corrected elevation image, the mean elevations of the pixels in the near or far vicinity of the point in question are determined, and a filtered image of the elevations is determined by assigning to this pixel a grey level proportional to an elevation score calculated by comparing these mean elevations to predetermined threshold values.

7. Method of analysis according to Claim 6, wherein the product of the filtered image of the orientations and the filtered image of the elevations is found in order to obtain a combined image.

8. Method of analysis according to Claim 7, wherein thresholding is performed on the combined image to obtain a segmented image in which the areas of the surface to be inspected which may contain a blow hole are highlighted.

Fig 1

Fig 2

Fig 3

Fig 4

**S**

**Fig 5**

**Fig 6**

**S**

**Fig 7**

**S**

**Fig 8**

**S**

**Fig 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7257996 B, Hassler ULF [DE]
- EP 1750089 A
- EP 2235679 A
- FR 2966956